# EUROPEAN PATENT APPLICATION

(11) **EP 4 723 042 A2**
(43) Date of publication of application: **08.04.2026**
(21) Application number: 26159744.7
(22) Date of filing: 09.05.2024
(51) Int. Cl.: G06T 11/60

(54) **PROMPT-DRIVEN IMAGE EDITING USING MACHINE LEARNING**

(30) Priority: 09.05.2023 US 202363465226 P
(62) Divisional of application: 24731716.7
(71) Applicant: Google LLC, Mountain View, CA 94043 (US)
(72) Inventor: KNAAN, Yael Pritch, Mountain View, 94043 (US); PETRANK, Noam, Mountain View, 94043 (US); SARMA, Navin, Mountain View, 94043 (US); COHEN, Matan, Mountain View, 94043 (US); VOYNOV, Andrey, Mountain View, 94043 (US); LELLOUCHE, Amir, Mountain View, 94043 (US); HERTZ, Amir, Mountain View, 94043 (US); ACHA, Alex Rav, Mountain View, 94043 (US)
(74) Representative: Betten & Resch

(57) **Abstract**

A media application receives an initial image and a textual request to change the initial image, the initial image including a subject with a face. The media application generates, from the initial image, a preserving mask that corresponds to the face of the subject. The media application provides the textual request, the initial image, and the preserving mask as input to a diffusion model. The diffusion model outputs a denoised initial image based on the initial image; performs text conditioning of the textual request and forward diffusion to generate a noisy translated image that satisfies the textual request; and outputs based on the noisy translated image, extracted features, and self-attention maps, a denoised translated image. The media application blends the denoised initial image, the preserving mask, and the denoised translated image to form an output image, wherein the preserving mask prevents modification to the face from the initial image.

## Description

### CROSS-REFERENCE TO RELATED APPLICATIONS

The present application claims priority to U.S. Provisional Patent Application No. 63/465,226, filed May 9, 2023, and titled "Prompt-Driven Image Editing Using Machine-Learning," which is incorporated herein in its entirety.

### BACKGROUND

Generative artificial intelligence (AI) may be used to generate images from text prompts. For example, a user can ask for an image of an avocado chair, which is then created by the generative Al. The results are often problematic, especially when the images include people, because the more detailed aspects can be improperly represented. For example, generative AI is still under development when it comes to capturing the intricacies of features like fingers, eyes, and mouth.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

A computer-implemented method includes receiving an initial image and a textual request to change the initial image, the initial image including a subject with a face. The method further includes generating a preserving mask that corresponds to the face of the subject. The method further includes providing the textual request, the initial image, and the preserving mask as input to a diffusion model. The method further outputting, with the diffusion model, a denoised initial image based on the initial image. The method further includes performing, with the diffusion model, text conditioning of the textual request and forward diffusion to generate a noisy translated image that satisfies the textual request. The method further includes outputting, with the diffusion model, based on the noisy translated image, extracted features, and self-attention maps, a denoised translated image. The method further includes blending the denoised initial image, the preserving mask, and the denoised translated image to form an output image, wherein the preserving mask prevents modification to the face from the initial image.

In some embodiments, outputting the denoised initial image includes performing, with the diffusion model, an inverse diffusion of the initial image to generate a noisy initial image based on the initial image and providing, to a first convolutional neural network (CNN), the noisy initial image and outputting the denoised initial image and outputting the denoised translated image includes providing, to a second CNN, the noisy translated image; injecting the extracted features and the self-attention maps during diffusion; and outputting the denoised translated image. In some embodiments, the inverse diffusion is a denoising diffusion implicit model (DDIM) inversion.

In some embodiments, the method further includes receiving a selection of a first object in the initial image, wherein the textual request includes comments to replace the first object in the initial image with a second object. In some embodiments, the method further includes identifying, from the initial image, a region in a background to replace or modify and providing a suggestion to replace or modify the background, wherein the textual request is associated with the suggestion. In some embodiments, the method further includes identifying, from the initial image, an object in a background to remove and providing a suggestion to remove the object from the background. In some embodiments, the method further includes identifying, from the initial image, one or more objects to replace and providing a suggestion to replace the object.

In some embodiments, the textual request is to change a background of the initial image and the preserving mask further includes one or more parts of the subject in addition to the face of the subject. In some embodiments, the textual request further includes at least one selection from a group of a global preset, a menu of options, a library of premade prompts, and combinations thereof.

A non-transitory computer-readable medium includes instructions stored thereon that, when executed by one or more processors, cause the one or more processors to perform operations. The operations include receiving an initial image and a textual request to change the initial image, the initial image including a subject with a face; generating a preserving mask that corresponds to the face of the subject; providing the textual request, the initial image, and the preserving mask as input to a diffusion model; outputting, with the diffusion model, a denoised initial image based on the initial image; performing, with the diffusion model, text conditioning of the textual request and forward diffusion to generate a noisy translated image that satisfies the textual request; outputting, with the diffusion model, based on the noisy translated image, extracted features, and self-attention maps, a denoised translated image; and blending the denoised initial image, the preserving mask, and the denoised translated image to form an output image, wherein the preserving mask prevents modification to the face from the initial image.

In some embodiments, outputting the denoised initial image includes performing, with the diffusion model, an inverse diffusion of the initial image to generate a noisy initial image based on the initial image and providing, to a first convolutional neural network (CNN), the noisy initial image and outputting the denoised initial image and outputting the denoised translated image includes providing, to a second CNN, the noisy translated image; injecting the extracted features and the self-attention maps during diffusion; and outputting the denoised translated image. In some embodiments, the inverse diffusion is a DDIM inversion. In some embodiments, the operations further include receiving a selection of a first object in the initial image, wherein the textual request includes comments to replace the first object in the initial image with a second object. In some embodiments, the operations further include identifying, from the initial image, a region in a background to replace or modify and providing a suggestion to replace or modify the background, wherein the textual request is associated with the suggestion. In some embodiments, the operations further include identifying, from the initial image, a region in a background to replace or modify and providing a suggestion to replace or modify the background, wherein the textual request is associated with the suggestion.

A system includes a processor and a memory coupled to the processor, with instructions stored thereon that, when executed by the processor, cause the processor to perform operations. The operations include receiving an initial image and a textual request to change the initial image, the initial image including a subject with a face; generating a preserving mask that corresponds to the face of the subject; providing the textual request, the initial image, and the preserving mask as input to a diffusion model; outputting, with the diffusion model, a denoised initial image based on the initial image; performing, with the diffusion model, text conditioning of the textual request and forward diffusion to generate a noisy translated image that satisfies the textual request; outputting, with the diffusion model, based on the noisy translated image, extracted features, and self-attention maps, a denoised translated image; and blending the denoised initial image, the preserving mask, and the denoised translated image to form an output image, wherein the preserving mask prevents modification to the face from the initial image.

In some embodiments, outputting the denoised initial image includes performing, with the diffusion model, an inverse diffusion of the initial image to generate a noisy initial image based on the initial image and providing, to a first convolutional neural network (CNN), the noisy initial image and outputting the denoised initial image and outputting the denoised translated image includes providing, to a second CNN, the noisy translated image; injecting the extracted features and the self-attention maps during diffusion; and outputting the denoised translated image. In some embodiments, the inverse diffusion is a DDIM inversion. In some embodiments, the operations further include receiving a selection of a first object in the initial image, wherein the textual request includes comments to replace the first object in the initial image with a second object. In some embodiments, the operations further include identifying, from the initial image, a region in a background to replace or modify and providing a suggestion to replace or modify the background, wherein the textual request is associated with the suggestion. In some embodiments, the operations further include identifying, from the initial image, a region in a background to replace or modify and providing a suggestion to replace or modify the background, wherein the textual request is associated with the suggestion.

### BRIEF DESCRIPTION OF THE DRAWINGS

Figure 1 is a block diagram of an example network environment, according to some embodiments described herein.
Figure 2 is a block diagram of an example computing device, according to some embodiments described herein.
Figure 3A illustrates an example initial image, according to some embodiments described herein.
Figure 3B illustrates an example output image where the shirt is changed and the object is replaced with another object, according to some embodiments described herein.
Figure 3C illustrates an example output image where the user's outfit, hair, and skin are changed, according to some embodiments described herein.
Figure 3D illustrates an example output image where the background is changed, according to some embodiments described herein.
Figure 4 illustrates example user interfaces that include options for selecting different regions of the image to change, global presets to apply, a field for providing text, and an example output image, according to some embodiments described herein.
Figure 5 illustrates example user interfaces that include options for receiving user input for selecting an object to be replaced by a textual request, according to some embodiments described herein.
Figure 6 illustrates an example user interface that includes a menu of options and a library of premade prompts, according to some embodiments described herein.
Figure 7 illustrates an example architecture for generating a self-attention map and using the self-attention map during diffusion, according to some embodiments described herein.
Figure 8 illustrates an example architecture for generating an image that uses inversion and a text-conditioned diffusion process, according to some embodiments described herein.
Figure 9 is a block diagram of an example architecture for generating an image that incorporates a textual request, according to some embodiments described herein.
Figure 10 illustrates an example method to generate an output image from a textual request, according to some embodiments described herein.
Figure 11 illustrates another example method to generate an output image from a textual request, according to some embodiments described herein.

### DETAILED DESCRIPTION

Generative artificial intelligence (AI) may be used to generate images from text prompts. For example, a user can ask for an image of an avocado chair, which is then created by the generative AI. The results are often problematic, especially when the images include people, because the more detailed aspects can be improperly represented. For example, generative AI is still under development when it comes to capturing the intricacies of features like fingers, eyes, and mouth.

The technology described below includes a media application that receives an initial image and a textual request to change the initial image. The initial image includes a subject with a face, such as an initial image of a family on top of a mountain and a textual request to replace the family's clothing, which includes heavy jackets, with summer clothing. The textual request may be received directly from a user or selected from a library of premade prompts or a menu of options. The media application generates a preserving mask that corresponds to the face.

The textual request, the initial image, and the preserving masks are provided as input to a diffusion model. The diffusion model outputs a denoised initial image based on the initial image, performs text conditioning of the textual request and forward diffusion to generate a noisy translated image that satisfies the textual request, and outputs based on the noisy translated image, extracted features, and self-attention maps, a denoised translated image. The denoised initial image, the preserving mask, and the denoised translated image are blended to form an output image, where the preserving mask prevents modification to the face from the initial image. The extracted features and the self-attention maps are used to maintain the structure of the initial image and make changes to the initial image in a faster process than would occur if the output image were generated without reference to the initial image.

The media application may perform additional steps, such as identifying regions to replace or modify. Continuing with the example above, the media application may suggest making the background less cloudy. The media application may also identify objects for removal. For example, the media application may suggest removing other people and hiking gear from the background of the initial image.

### Example Environment 100

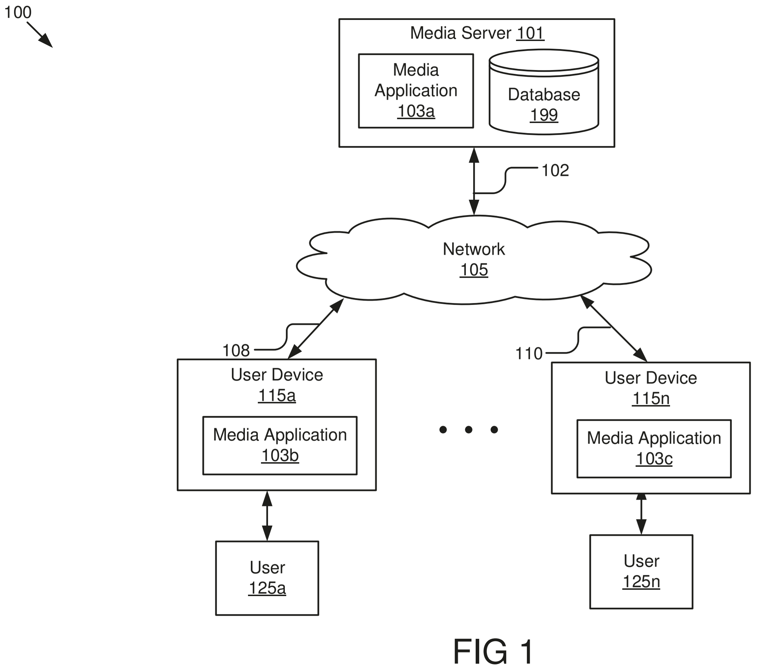

Figure 1 illustrates a block diagram of an example environment 100. In some embodiments, the environment 100 includes a media server 101, a user device 115a, and a user device 115n coupled to a network 105. Users 125a, 125n may be associated with respective user devices 115a, 115n. In some embodiments, the environment 100 may include other servers or devices not shown in Figure 1. In Figure 1 and the remaining figures, a letter after a reference number, e.g., "115a," represents a reference to the element having that particular reference number. A reference number in the text without a following letter, e.g., "115," represents a general reference to embodiments of the element bearing that reference number.

The media server 101 may include a processor, a memory, and network communication hardware. In some embodiments, the media server 101 is a hardware server. The media server 101 is communicatively coupled to the network 105 via signal line 102. Signal line 102 may be a wired connection, such as Ethernet, coaxial cable, fiber-optic cable, etc., or a wireless connection, such as Wi-Fi^{®}, Bluetooth^{®}, or other wireless technology. In some embodiments, the media server 101 sends and receives data to and from one or more of the user devices 115a, 115n via the network 105. The media server 101 may include a media application 103a and a database 199.

The database 199 may store machine-learning models, training data sets, images, etc. The database 199 may also store social network data associated with users 125, user preferences for the users 125, etc.

The user device 115 may be a computing device that includes a memory coupled to a hardware processor. For example, the user device 115 may include a mobile device, a tablet computer, a mobile telephone, a wearable device, a head-mounted display, a mobile email device, a portable game player, a portable music player, a reader device, or another electronic device capable of accessing a network 105.

In the illustrated implementation, user device 115a is coupled to the network 105 via signal line 108 and user device 115n is coupled to the network 105 via signal line 110. The media application 103 may be stored as media application 103b on the user device 115a and/or media application 103c on the user device 115n. Signal lines 108 and 110 may be wired connections, such as Ethernet, coaxial cable, fiber-optic cable, etc., or wireless connections, such as Wi-Fi^{®}, Bluetooth^{®}, or other wireless technology. User devices 115a, 115n are accessed by users 125a, 125n, respectively. The user devices 115a, 115n in Figure 1 are used by way of example. While Figure 1 illustrates two user devices, 115a and 115n, the disclosure applies to a system architecture having one or more user devices 115.

The media application 103 may be stored on the media server 101 or the user device 115. In some embodiments, the operations described herein are performed on the media server 101 or the user device 115. In some embodiments, some operations may be performed on the media server 101 and some may be performed on the user device 115. Performance of operations is in accordance with user settings. For example, the user 125a may specify settings that operations are to be performed on their respective device 115a and not on the media server 101. With such settings, operations described herein are performed entirely on user device 115a and no operations are performed on the media server 101. Further, a user 125a may specify that images and/or other data of the user is to be stored only locally on a user device 115a and not on the media server 101. With such settings, no user data is transmitted to or stored on the media server 101. Transmission of user data to the media server 101, any temporary or permanent storage of such data by the media server 101, and performance of operations on such data by the media server 101 are performed only if the user has agreed to transmission, storage, and performance of operations by the media server 101. Users are provided with options to change the settings at any time, e.g., such that they can enable or disable the use of the media server 101.

Machine learning models (e.g., neural networks or other types of models), if utilized for one or more operations, are stored and utilized locally on a user device 115, with specific user permission. Server-side models are used only if permitted by the user. Further, a trained model may be provided for use on a user device 115. During such use, if permitted by the user 125, on-device training of the model may be performed. Updated model parameters may be transmitted to the media server 101 if permitted by the user 125, e.g., to enable federated learning. Model parameters do not include any user data.

The media application 103 receives an initial image and a textual request to change the initial image, the initial image including a subject with a face. For example, the media application 103 receives an initial image from a camera that is part of the user device 115 or the media application 103 receives the initial image over the network 105. The media application 103 generates, from the initial image, a preserving mask that corresponds to the face of the subject. The media application 103 provides the textual request, the initial image, and the preserving mask as input to a diffusion model. The diffusion model outputs a denoised initial image based on the initial image; performs text conditioning of the textual request and forward diffusion to generate a noisy translated image that satisfies the textual request; and outputs based on the noisy translated image, extracted features, and self-attention maps, a denoised translated image. The media application 103 blends the denoised initial image, the preserving mask, and the denoised translated image to form an output image, wherein the preserving mask prevents modification to the face from the initial image. The output image that satisfies the textual request corresponds to the initial image, where, in the output image, the pixels of the face of the subject are pixels of the face of the subject in the initial image and pixels that do not define the face are pixels of the initial image that are modified by the diffusion process according to the textual request.

In some embodiments, the media application 103 may be implemented using hardware including a central processing unit (CPU), a field-programmable gate array (FPGA), an application-specific integrated circuit (ASIC), machine learning processor/ coprocessor, any other type of processor, or a combination thereof. In some embodiments, the media application 103a may be implemented using a combination of hardware and software.

### Example Computing Device 200

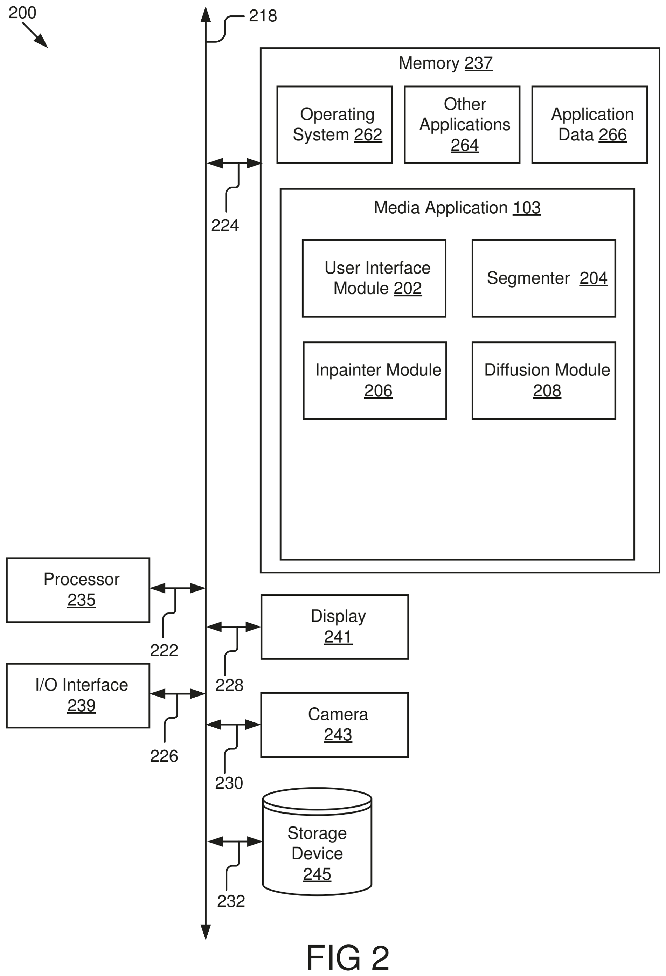

Figure 2 is a block diagram of an example computing device 200 that may be used to implement one or more features described herein. Computing device 200 can be any suitable computer system, server, or other electronic or hardware device. In one example, computing device 200 is media server 101 used to implement the media application 103a. In another example, computing device 200 is a user device 115.

In some embodiments, computing device 200 includes a processor 235, a memory 237, an input/output (I/O) interface 239, a display 241, a camera 243, and a storage device 245 all coupled via a bus 218. The processor 235 may be coupled to the bus 218 via signal line 222, the memory 237 may be coupled to the bus 218 via signal line 224, the I/O interface 239 may be coupled to the bus 218 via signal line 226, the display 241 may be coupled to the bus 218 via signal line 228, the camera 243 may be coupled to the bus 218 via signal line 230, and the storage device 245 may be coupled to the bus 218 via signal line 232.

Processor 235 can be one or more processors and/or processing circuits to execute program code and control basic operations of the computing device 200. A "processor" includes any suitable hardware system, mechanism or component that processes data, signals or other information. A processor may include a system with a general-purpose central processing unit (CPU) with one or more cores (e.g., in a single-core, dual-core, or multi-core configuration), multiple processing units (e.g., in a multiprocessor configuration), a graphics processing unit (GPU), a field-programmable gate array (FPGA), an application-specific integrated circuit (ASIC), a complex programmable logic device (CPLD), dedicated circuitry for achieving functionality, a special-purpose processor to implement neural network model-based processing, neural circuits, processors optimized for matrix computations (e.g., matrix multiplication), or other systems. In some embodiments, processor 235 may include one or more co-processors that implement neural-network processing. In some embodiments, processor 235 may be a processor that processes data to produce probabilistic output, e.g., the output produced by processor 235 may be imprecise or may be accurate within a range from an expected output. Processing need not be limited to a particular geographic location or have temporal limitations. For example, a processor may perform its functions in real-time, offline, in a batch mode, etc. Portions of processing may be performed at different times and at different locations, by different (or the same) processing systems. A computer may be any processor in communication with a memory.

Memory 237 is typically provided in computing device 200 for access by the processor 235, and may be any suitable processor-readable storage medium, such as random access memory (RAM), read-only memory (ROM), Electrical Erasable Read-only Memory (EEPROM), Flash memory, etc., suitable for storing instructions for execution by the processor or sets of processors, and located separate from processor 235 and/or integrated therewith. Memory 237 can store software operating on the computing device 200 by the processor 235, including a media application 103.

The memory 237 may include an operating system 262, other applications 264, and application data 266. Other applications 264 can include, e.g., an image library application, an image management application, an image gallery application, communication applications, web hosting engines or applications, media sharing applications, etc. One or more methods disclosed herein can operate in several environments and platforms, e.g., as a stand-alone computer program that can run on any type of computing device, as a web application having web pages, as a mobile application ("app") run on a mobile computing device, etc.

The application data 266 may be data generated by the other applications 264 or hardware of the computing device 200. For example, the application data 266 may include images used by the image library application and user actions identified by the other applications 264 (e.g., a social networking application), etc.

I/O interface 239 can provide functions to enable interfacing the computing device 200 with other systems and devices. Interfaced devices can be included as part of the computing device 200 or can be separate and communicate with the computing device 200. For example, network communication devices, storage devices (e.g., memory 237 and/or storage device 245), and input/output devices can communicate via I/O interface 239. In some embodiments, the I/O interface 239 can connect to interface devices such as input devices (keyboard, pointing device, touchscreen, microphone, scanner, sensors, etc.) and/or output devices (display devices, speaker devices, printers, monitors, etc.).

Some examples of interfaced devices that can connect to I/O interface 239 can include a display 241 that can be used to display content, e.g., images, video, and/or a user interface of an output application as described herein, and to receive touch (or gesture) input from a user. For example, display 241 may be utilized to display a user interface that includes a graphical guide on a viewfinder. Display 241 can include any suitable display device such as a liquid crystal display (LCD), light emitting diode (LED), or plasma display screen, cathode ray tube (CRT), television, monitor, touchscreen, three-dimensional display screen, or other visual display device. For example, display 241 can be a flat display screen provided on a mobile device, multiple display screens embedded in a glasses form factor or headset device, or a monitor screen for a computer device.

Camera 243 may be any type of image capture device that can capture images and/or video. In some embodiments, the camera 243 captures images or video that the I/O interface 239 transmits to the media application 103.

The storage device 245 stores data related to the media application 103. For example, the storage device 245 may store a training data set that includes labeled images, a machine-learning model, output from the machine-learning model, etc.

Figure 2 illustrates an example media application 103, stored in memory 237, that includes a user interface module 202, a segmenter 204, an inpainter module 206, and a diffusion module 208.

The user interface module 202 generates graphical data for displaying a user interface that includes images. The user interface module 202 receives initial images. The initial image may be received from the camera 243 of the computing device 200 or from the media server 101 via the I/O interface 239. The initial image includes a subject with a face, such as a person or an animal.

The user interface includes an option for providing a textual request associated with the initial image. For example, the user interface may include a text field where the user directly inputs the textual request, an audio button for providing audio input that is converted to a textual request, etc. In some embodiments, the user interface may update with autocompleted suggestions while the user provides a text request. For example, for an outdoor scene, where the text field includes "change to m" the user interface module 202 may add "mountains" as an autocomplete suggestion. The user interface also includes an option for receiving user input for selecting objects and regions to modify and/or replace.

The user interface module 202 may identify one or more objects in the initial image to replace. In some embodiments, the user interface module 202 performs object recognition to identify objects in the initial image and provides suggestions for replacing the object. For example, the user interface may highlight an object and include a menu of options or a library of premade prompts to select. The user interface may include a library of premade prompts for how to change a scene, change clothing of a person in an image, etc. For example, the user may select a premade prompt to change an initial image of a beach scene with houses in the background to an output image where the houses were replaced with sandcastles.

In some embodiments, the user interface includes options for selecting various people, objects, parts of people or objects, or backgrounds in the initial image to modify or change based on the request. For example, a user may select a person by tapping on the person, circling an object, etc. In some embodiments, the user interface generates recommendations for modifying the image, such as highlighting the boots of a person in the image and asking if the user would like to change the person's boots.

In some embodiments, the textual request is related to replacing a first object in the initial image with a second object. For example, a user may select a first object and provide text input about replacing the selected object with a second object that corresponds to the textual request.

The user interface module 202 may identify a region in a background of an initial image to replace or modify and provide a suggestion to replace or modify the background. For example, the suggestion may include global presets, such as a list of themes that can be selected to change the initial image.

The user interface module 202 may identify an object in the background of the initial image to remove. For example, the object may be identified by the user interface module 202 in response to performing object recognition. The user interface may provide a suggestion for removing the object from the background. In some embodiments, the user interface includes a text field for receiving a textual request from the user for replacing an object based on the textual request.

In some embodiments, the user interface module 202 generates graphical data for displaying an output image. The user interface may also include options for editing the output image, sharing the output image, adding the output image to a photo album, etc.

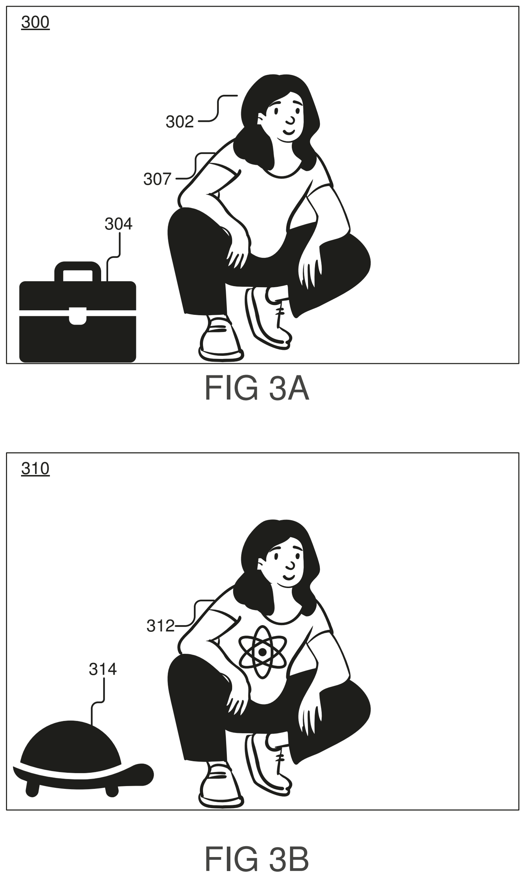

Turning to Figure 3A, an example initial image 300 is illustrated, according to some embodiments described herein. The initial image 300 includes a woman 302 as a subject, a shirt 307 worn by the woman 302, and a suitcase 304. The initial image 300 is displayed as part of a user interface (not shown) that includes ways for a user to provide user input. For example, the user interface may include a text field that receives textual input, the user interface may identify a finger or a mouse (or other indicator) selecting an object by clicking on an object, circling an object, moving back and forth over an object to highlight the object, etc.

Figure 3B illustrates an example output image 310 where a shirt 312 is changed from the shirt 307 in Figure 3A and the suitcase 304 in Figure 3A is replaced with a turtle 314 in Figure 3B, according to some embodiments described herein. To achieve the output image 310 in Figure 3B, the request provided for the initial image 300 in Figure 3A may include a science shirt 312 and replacing the suitcase 304 in Figure 3A with a turtle 314.

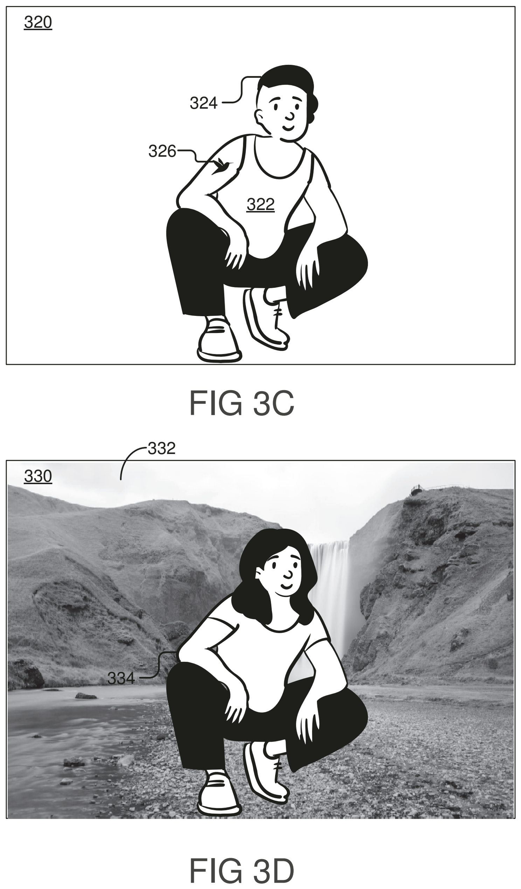

Figure 3C illustrates an example output image 320 where the subject's shirt 322 and hair 324 are changed and a tattoo 326 is added to the subject's arm, according to some embodiments described herein. To achieve the output image 320 in Figure 3C, a user may have provided a textual request for the initial image 300 in Figure 3A to make the subject more punk rock, selected a punk rock theme from a library of premade prompts, individually changed each object in the input image 300, etc.

Figure 3D illustrates an example output image 330 where the background is changed, according to some embodiments described herein. To achieve the output image 330 in Figure 3D, a textual request provided for the initial image 300 in Figure 3A may include a request to add a background of a waterfall. In some embodiments, the preserving mask for Figure 3D encompasses all of the subject (instead of, e.g., just the face) since the preserving mask prevents the subject from being modified while the background is replaced.

As discussed in greater detail below, the diffusion module 208 uses a preserving mask for Figures 3B, 3C, and 3D that includes at least the subject's face to prevent the subject's face from being modified during blending with a synthetic image.

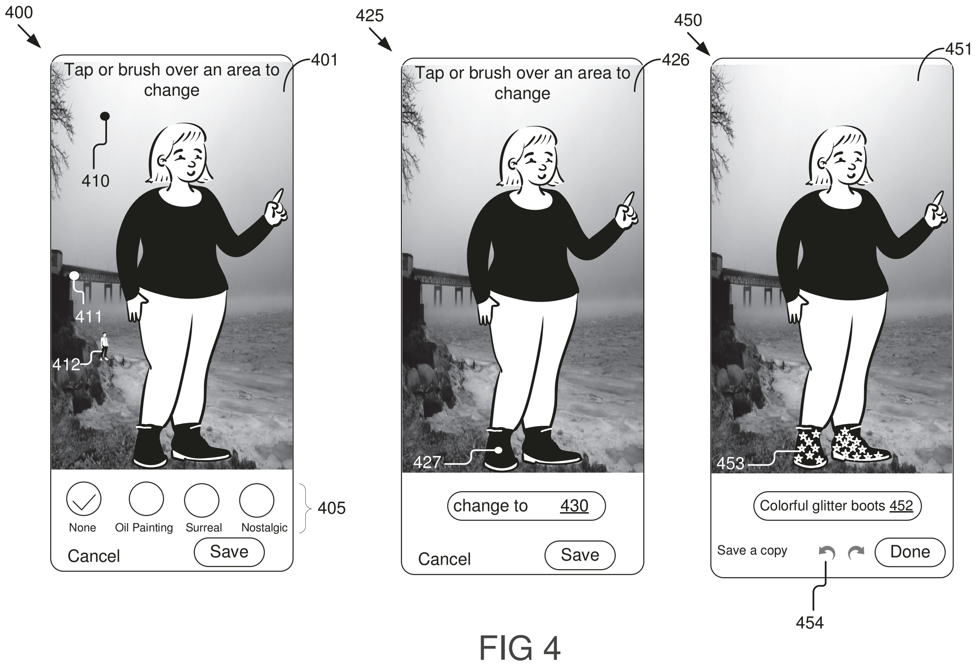

Figure 4 illustrates example user interfaces 400, 425, 450 that include options for selecting different regions of an image to change, global presets to apply, a field for providing text, and an example output image, according to some embodiments described herein. Specifically, the first user interface 400 automatically provides global presets 405 for a user to select to change an input image 401 to look like an oil painting, a surreal world, or a nostalgic scene. The user can select an option from the global presets 405 such as oil painting, surreal, or a nostalgic scene to temporarily change the input image and can revert to an original input image by selecting the option none from the global presets 405.

The first user interface 400 also includes circles 410, 411, 412 that represent identifications of different regions in the initial image 401. The user can specify changes that are made to the sky by tapping the first circle 410, to the bridge by tapping the second circle 411, and to the person by tapping the third circle 412.

In response to the user selecting one of the circles 410, 411, 412, the user interface may update the display to provide a menu of options (not shown). For example, selecting the first circle 410 may cause the user interface to display suggestions, such as changing the cloudy sky to a clear sky. Selecting the second circle 411 may cause the user interface to display suggestions, such as an option to remove the bridge associated with the second circle 411, an option to replace the bridge with a different type of bridge or a boat, etc. Selecting the third circle 412 may cause the user interface to display a suggestion remove the person.

The second user interface 425 includes an input image 426 and a text input field 430 where the user can specify changes that they want made. The user can either include a description specific enough to encompass the objects that the user wants to be changed (e.g., change the boots to colorful glitter boots) or the user can select an object in the second user interface 425 that the user wants to be changed and then describe the particular changes to be made. For example, a user may select an object by tapping on the object, circling the object, scribbling on the object, etc. In this case, a user selects a boot 427 on the subject.

The third user interface 450 includes an output image 451 where the text request 452 of "colorful glitter boots" is fulfilled. The boots 453 are changed to be sparkly colorful stars. The user interface also includes an option that allows the user to undo 454 the changes made to the initial image.

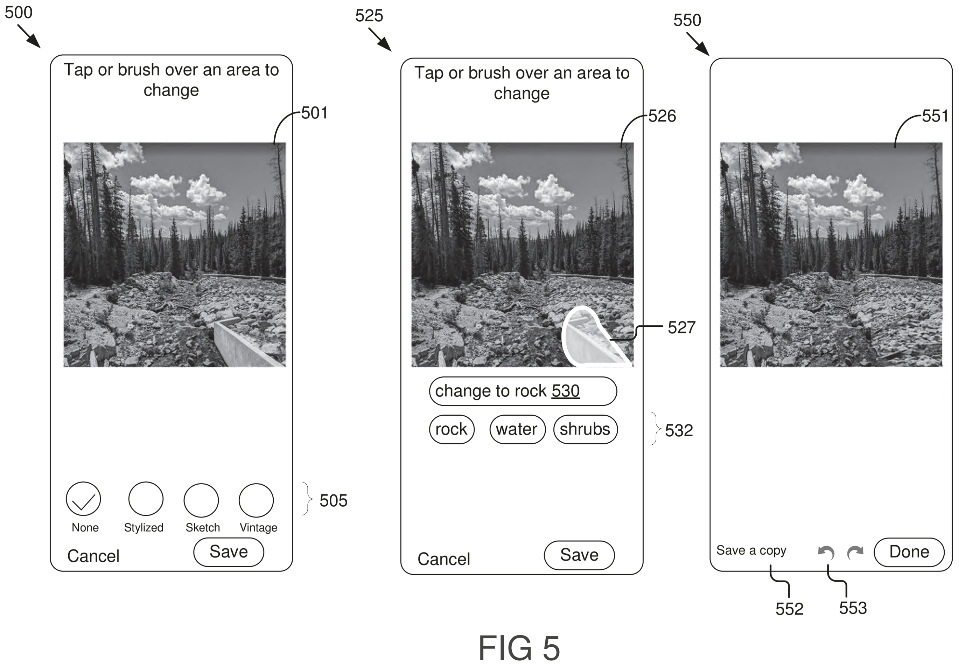

Figure 5 illustrates example user interfaces 500, 525, 550 that include options for receiving user input for selecting an object to be replaced based on a textual request, according to some embodiments described herein. The first user interface 500 includes the initial image 501 and suggested global presets 505. In some embodiments, the user interface module 202 performs object recognition on the initial image 501 to determine objects in the initial image 501 and provides the suggested global presets 505 based on the determined objects. For example, the user interface module 202 may suggest the global presets 505 stylized, sketch, and vintage for the outdoor scene as these presets are particularly well-suited for the outdoor scenes.

The second user interface 525 includes an initial image 526 where a user circled a concrete object in the initial image 526. The second user interface 525 highlights the selected object 527 with an outline. The text input field 530 includes text where the user entered "rock" after the initial prompt "change to" to indicate that the user wants to replace the highlighted section with a rock. The second user interface 525 also includes suggested objects 532, such as a rock, water, and shrubs. In some embodiments, the suggested objects are provided based on the user interface module 202 performing object recognition and suggesting objects that would commonly be found with other objects found in the image, such as the stream, rocks, and mountains.

The third user interface 550 includes an output image 551 that was generated by the user interface module 202 to replace the selected object 527 in the second user interface 525 with rocks as specified by the user. The third user interface 550 also includes an option to save a copy of the output image 552 and undo changes to the output image 553.

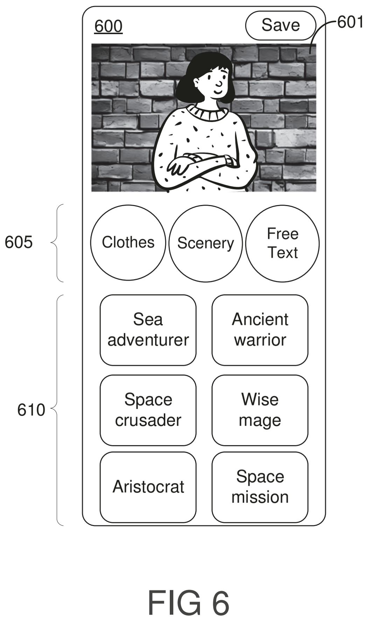

Figure 6 illustrates an example user interface 600 that includes a menu of options 605 and a library of premade prompts 610, according to some embodiments described herein. In this example, the menu of options 605 includes options for modifying the subject's clothes, the scenery in the input image 601, and a free text option for providing more specific changes. The library of premade prompts 610 includes different themes to be applied to the input image 601 that include sea adventurer, ancient warrior, space crusader, wise mage, aristocrat, and space mission.

In some embodiments, the user interface module 202 generates a user interface that includes options for modifying user preferences. For example, the user interface may include a user preference for specifying a level of stochasticity that includes how much noise the user wants to see in an output image (e.g., the extent to which the output image differs from the initial image) and an extent that a realistic seed is used in the output image (e.g., the extent to which the output image differs from reality). For example, where an input image is a boy drinking liquid from a straw in a mug, a spectrum of increasing stochasticity results in an output image going from small changes, such as a difference in the type of mug and the background looking slightly different, to comprehensive changes where the mug is different, the background is completely different, the boy's clothing is different, and the table that the mug is resting on is different. In another example, where the extent of the type of seed is increased, a spectrum of increasing difference in the types of seeds results in an output image going from replacing the mug with a recognizable mug and the background changing from a kitchen counter to another room in a house to the mug being an unrecognizable mug and the background changing to a room on a spaceship.

In some embodiments, the user interface module 202 generates a graphical user interface that includes an option for receiving user input from the user that can be translated into an image. For example, the user may sketch an outline of a dinosaur and the diffusion module 208 may generate an output image that includes a dinosaur based on the sketch. In some embodiments, the user interface receives the user input on an initial image. For example, a user may sketch a hat onto an initial image of a child and the user interface module 202 updates the user interface to include the output image generated by the diffusion module 208, which includes a rendering of the sketched hat.

The segmenter 204 segments one or more objects including a face of a subject from an initial image. The face segment includes pixels that correspond to a location of the face in the initial image. The segmenter 204 segments the face of the subject in order to generate a preserving mask that the diffusion module 208 uses to prevent modification to the face during generation of an output image. The face segmentation may be used to prevent modification to a subject's face while changing aspects of the subject's hair, clothing, etc.

The segmenter 204 may also segment more than the face, such as an entire body in cases where the entire body is prevented from being modified. The body segment includes pixels that correspond to a location of the body in the initial image. The body segmentation may be used to prevent modification to the entire body while the rest of the image is modified, such as a change to a background of the initial image. In some embodiments, the preserving mask includes all aspects of the initial image except the part being modified. For example, the preserving mask may encompass the face, the hair, and a background while a subject's clothing is modified.

The segmenter 204 may segment the other objects in the initial image automatically or in response to user input. For example, where the user interface module 202 generates suggestions for objects in the initial image to modify, remove, and/or replace, the segmenter 204 segments the objects. In another example, the user interface receives user input identifying an object to be modified, removed, and/or replaced and the segmenter 204 segments the object in response to the object being selected. In some embodiments, the segmenter 204 generates a segmentation map that associates an identity with each pixel in the initial image as belonging to the face, the body, an object, etc.

In some embodiments, the segmenter 204 uses an alpha map as part of a technique for distinguishing a foreground and a background of the initial image during segmentation. The segmenter 204 may also identify a texture of the selected object in the foreground of the initial image.

The segmenter 204 may perform the segmentation by detecting objects in an initial image. The object may be a person, an animal, a car, a building, etc. A person may be a subject of the initial image or is not the subject of the initial image (i.e., a bystander). A bystander may include people walking, running, riding a bicycle, standing behind the subject, or otherwise within the initial image. In different examples, a bystander may be in the foreground (e.g., a person crossing in front of the camera), at the same depth as the subject (e.g., a person standing to the side of the subject), or in the background. In some examples, there may be more than one bystander in the initial image. The bystander may be a human in an arbitrary pose, e.g., standing, sitting, crouching, lying down, jumping, etc. The bystander may face the camera, may be at an angle to the camera, or may face away from the camera.

The segmenter 204 may detect types of objects by performing object recognition, comparing the objects to object priors of people, vehicles, buildings, etc. to identify expected shapes of objects to determine whether pixels are associated with a selected object or a background. The segmenter 204 may generate a region of interest for the selected object, such as a bounding box with x, y coordinates and a scale.

The segmenter 204 generates a preserving mask that encompasses at least a face of the subject. The preserving mask for the face ma comprise pixels corresponding to the pixels of the face segment in the initial image. In some embodiments, the preserving mask includes additional or different body parts, such as an entire head, hands, a body of the subject, etc. In some embodiments, the preserving mask is generated based on generating superpixels for the image and matching superpixel centroids to depth map values (e.g., obtained by the camera 243 using a depth sensor or by deriving depth from pixel values) to cluster detections based on depth. More specifically, depth values in a masked area may be used to determine a depth range and superpixels may be identified that fall within the depth range. Another technique for generating a mask includes weighing depth values based on how close the depth values are to the mask where weights were represented by a distance transform map.

In some embodiments, the segmenter 204 may specify a circuit configuration (e.g., for a programmable processor, for a field programmable gate array (FPGA), etc.) enabling processor 235 to apply a machine-learning model. In some embodiments, the segmenter 204 may include software instructions, hardware instructions, or a combination. In some embodiments, the segmenter 204 may offer an application programming interface (API) that can be used by the operating system 262 and/or other applications 264 to invoke the segmenter 204 e.g., to apply the machine-learning model to application data 266 to output the preserving mask.

The segmenter 204 uses training data to generate a trained machine-learning model. For example, training data may include pairs of initial images with one or more subjects and output images with one or more preserving masks.

Training data may be obtained from any source, e.g., a data repository specifically marked for training, data for which permission is provided for use as training data for machine learning, etc. In some embodiments, the training may occur on the media server 101 that provides the training data directly to the user device 115, the training occurs locally on the user device 115, or a combination of both.

In some embodiments, the segmenter 204 uses weights that are taken from another application and are unedited / transferred. For example, in these embodiments, the trained model may be generated, e.g., on a different device, and be provided as part of the segmenter 204. In various embodiments, the trained model may be provided as a data file that includes a model structure or form (e.g., that defines a number and type of neural network nodes, connectivity between nodes and organization of the nodes into a plurality of layers), and associated weights. The segmenter 204 may read the data file for the trained model and implement neural networks with node connectivity, layers, and weights based on the model structure or form specified in the trained model.

The trained machine-learning model may include one or more model forms or structures. For example, model forms or structures can include any type of neural-network, such as a linear network, a deep-learning neural network that implements a plurality of layers (e.g., "hidden layers" between an input layer and an output layer, with each layer being a linear network), a convolutional neural network (e.g., a network that splits or partitions input data into multiple parts or tiles, processes each tile separately using one or more neural-network layers, and aggregates the results from the processing of each tile), a sequence-to-sequence neural network (e.g., a network that receives as input sequential data, such as words in a sentence, frames in a video, etc. and produces as output a result sequence), etc.

The model form or structure may specify connectivity between various nodes and organization of nodes into layers. For example, nodes of a first layer (e.g., an input layer) may receive data as input data or application data. Such data can include, for example, one or more pixels per node, e.g., when the trained model is used for analysis, e.g., of an initial image. Subsequent intermediate layers may receive as input, output of nodes of a previous layer per the connectivity specified in the model form or structure. These layers may also be referred to as hidden layers. For example, a first layer may output a segmentation between a foreground and a background. A final layer (e.g., output layer) produces an output of the machine-learning model. For example, the output layer may receive the segmentation of the initial image into a foreground and a background and output whether a pixel is part of a preserving mask or not. In some embodiments, model form or structure also specifies a number and/ or type of nodes in each layer.

In different embodiments, the trained model can include one or more models. One or more of the models may include a plurality of nodes, arranged into layers per the model structure or form. In some embodiments, the nodes may be computational nodes with no memory, e.g., configured to process one unit of input to produce one unit of output. Computation performed by a node may include, for example, multiplying each of a plurality of node inputs by a weight, obtaining a weighted sum, and adjusting the weighted sum with a bias or intercept value to produce the node output. In some embodiments, the computation performed by a node may also include applying a step/activation function to the adjusted weighted sum. In some embodiments, the step/activation function may be a nonlinear function. In various embodiments, such computation may include operations such as matrix multiplication. In some embodiments, computations by the plurality of nodes may be performed in parallel, e.g., using multiple processors cores of a multicore processor, using individual processing units of a graphics processing unit (GPU), or special-purpose neural circuitry. In some embodiments, nodes may include memory, e.g., may be able to store and use one or more earlier inputs in processing a subsequent input. For example, nodes with memory may include long short-term memory (LSTM) nodes. LSTM nodes may use the memory to maintain "state" that permits the node to act like a finite state machine (FSM).

In some embodiments, the trained model may include embeddings or weights for individual nodes. For example, a model may be initiated as a plurality of nodes organized into layers as specified by the model form or structure. At initialization, a respective weight may be applied to a connection between each pair of nodes that are connected per the model form, e.g., nodes in successive layers of the neural network. For example, the respective weights may be randomly assigned, or initialized to default values. The model may then be trained, e.g., using training data, to produce a result.

Training may include applying supervised learning techniques. In supervised learning, the training data can include a plurality of inputs (e.g., images, preserving masks, etc.) and a corresponding groundtruth output for each input (e.g., a groundtruth mask that correctly identifies a portion of the subject, such as the subject's face, in each image). Based on a comparison of the output of the model with the groundtruth output, values of the weights are automatically adjusted, e.g., in a manner that increases a probability that the model produces the groundtruth output for the image.

In various embodiments, a trained model includes a set of weights, or embeddings, corresponding to the model structure. In some embodiments, the trained model may include a set of weights that are fixed, e.g., downloaded from a server that provides the weights. In various embodiments, a trained model includes a set of weights, or embeddings, corresponding to the model structure. In embodiments where data is omitted, the segmenter 204 may generate a trained model that is based on prior training, e.g., by a developer of the segmenter 204, by a third-party, etc. In some embodiments, the trained model may include a set of weights that are fixed, e.g., downloaded from a server that provides the weights.

In some embodiments, the trained machine-learning model receives an initial image with one or more subjects. In some embodiments, the trained machine-learning model outputs one or more preserving masks that correspond to the one or more subjects. For example, the one or more preserving masks may be for faces of the one or more subjects.

For situations where an object is removed from the initial image, an inpainter module 206 generates an inpainted image that replaces object pixels corresponding to one or more objects with background pixels. The background pixels may be based on pixels from a reference image of the same location without the objects. Alternatively, the inpainter module 206 may identify background pixels to replace the removed object based on a proximity of the background pixels to other pixels that surround the object. The inpainter module 206 may use a gradient of neighborhood pixels to determine properties of the background pixels. For example, where a bystander was standing on the ground, the inpainter module 206 replaces the background pixels with pixels of the ground. Other inpainting techniques are possible, including a machine-learning based inpainter technique that outputs background pixels based on training data that includes images of similar structures.

In embodiments where a user chose to erase the selected object, the user interface module 202 may display the inpainted image where the selected object was removed and the selected object pixels were replaced with background pixels.

The diffusion model receives a request (e.g., a textual request provided directly by the user, a selection of a premade prompt, a selection of a global preset, a selection of an option from a menu, etc.), the initial image, and the preserving mask as input. The diffusion model encodes images in latent space, performs the diffusion, and decodes back to pixel space.

The diffusion module 208 performs text conditioning of the request. Text conditioning describes the process of generating images that are conditioned on (e.g., aligned with) a text prompt. For example, if the text request is for replacing a red shirt that a subject is wearing in the initial image with a blue shirt, the diffusion module 208 performs text conditioning by generating an output image of a blue shirt.

In some embodiments, the diffusion module 208 trains the diffusion model using two types of training data. The first type of training data includes pairs of images where the pairs may include synthetic pairs generated through a prompt-to-prompt generative machine-learning model. The prompt-to-prompt generative machine-learning model is a diffusion model that receives a text prompt and uses self-attention to extract keys and values from the text prompt and switch parts of an attention map previously generated for an input image based on the inputted text prompt to output an output image to match the text prompt.

The prompt-to-prompt generative machine-learning model generates self-attention maps. Self-attention computes the interactions between different elements of an input sequence (e.g., the different words in a textual request). This is contrasted with cross-attention where the interactions are between two different input sequences (e.g., how the textual request relates to an original prompt.

Self-attention maps describe the structure and different semantic regions in an image. For example, an image that is described as "pepperoni pizza next to orange juice," in a self-attention map includes how a pixel on a crust of the pizza attends to other pixels on the crust. Conversely, in a cross-attention map a pixel on the crust of the pizza attends to the orange juice.

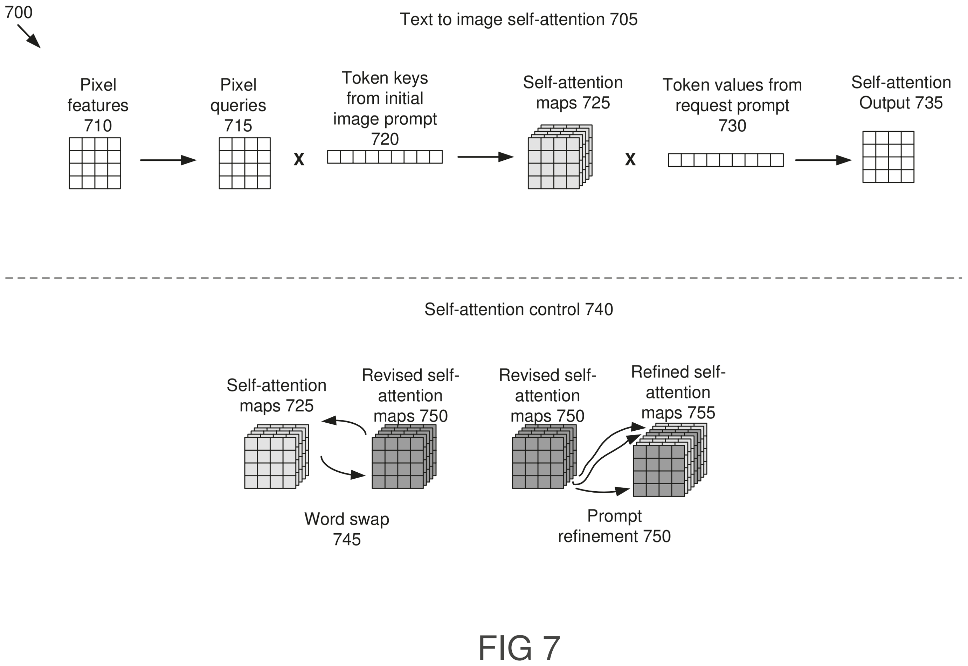

Turning to Figure 7, an example architecture 700 for generating a self-attention map and using the self-attention map during diffusion is illustrated, according to some embodiments described herein. Figure 7 includes two ways to describe the process: text to image self-attention 705 and self-attention control 740.

During text to image self-attention 705, the diffusion module 208 generates the attention maps by extracting pixel features 710 from a noisy input image. The pixel features 710 from the noisy input image are projected to a matrix of pixel queries 715. The textual embedding is projected to a key matrix, which takes the form of token keys from an initial image prompt 720. The initial image prompt may be "A cat with a hat lying on a beach chair."

The pixel queries 715 are multiplied by the token keys from the initial image prompt 720 to produce self-attention maps 725 for different layers. The different layers are used to focus on different features in the input image at different levels of abstraction. The self-attention maps 725 contain rich semantic relations that critically affect generated images. In the self-attention maps 725, each cell defines the weight of the value of a particular token on a particular pixel based on a latent projection dimension of the token keys from the initial image prompt 720 and the pixel queries 715.

The self-attention maps 725 are used to create an output image with modifications to the initial image. Continuing with the example above, the initial image prompt may be modified to be "A cat with a three-musketeers hat lying on a beach chair." The diffusion model creates token values from the request prompt 730. The self-attention maps 725 are multiplied by the token values from the request prompt 730 to yield a self-attention output 735 where the weights are the attention maps, which are correlated to the similarity between the pixel queries 714 and the token keys from the initial image prompt 720. The self-attention output 735 is used to create the output image.

The self-attention control 740 illustrates how the self-attention maps are revised based on differences between an initial image prompt and a request prompt. For example, "A cat on a chair" may be replaced with "A dog on a chair." The main challenge is to preserve the original composition while also addressing the content of the new prompt. Where words in the initial image prompt are replaced, the diffusion model performs a word swap 745 from self-attention maps 725 to revised self-attention maps 750. The revised self-attention maps 750 replaces the tokens for "cat" to "dog." If words are replaced using a different number of tokens, the diffusion model may duplicate or average the self-attention maps 725 to obtain the revised self-attention maps 750.

Additional words may be added to an initial image prompt. For example, "A cat on a chair" may be replaced with "A black cat on a white chair." The diffusion model performs prompt refinement 750 by adding self-attention maps for the new words and creating refined self-attention maps 755 that incorporate the new self-attention maps for the new words. To preserve the common details, the diffusion model applies the attention injection over the common tokens from both prompts (e.g., a cat on a chair). In some embodiments, the diffusion model uses an alignment function that receives a token index from a target prompt and outputs the corresponding token index.

Self-attention maps are used in a text-conditional diffusion model to use the structure and different sematic regions in an input image to change one or more token values, while fixing the self-attention maps to preserve the scene composition. In some embodiments, the diffusion model adds new words to the prompt and freezes the attention on previous tokens while allowing new attention to flow to the new tokens. This results in global editing or modification of a specific object in the input image to match the textual request.

Each diffusion step predicts the noise from a noisy image and text embedding. At the final step the process yields a generated image. The interaction between the text prompt and the image occurs during the noise prediction, where the embeddings of the visual and textual features are fused using self-attention layers that produce spatial attention maps for each textual token.

The second type of training data includes pairs with a real image and a synthetic image. The real image is received by a diffusion model, such as a denoising diffusion implicit model (DDIM). The diffusion model uses an inversion method to output a synthetic image based on the real image and an instruction for how to edit the input image. The diffusion module 208 trains the diffusion model to generate output images from a request using a forward process where the diffusion model adds noise to the data and a reverse process where the diffusion model learns to recover the data from the noise.

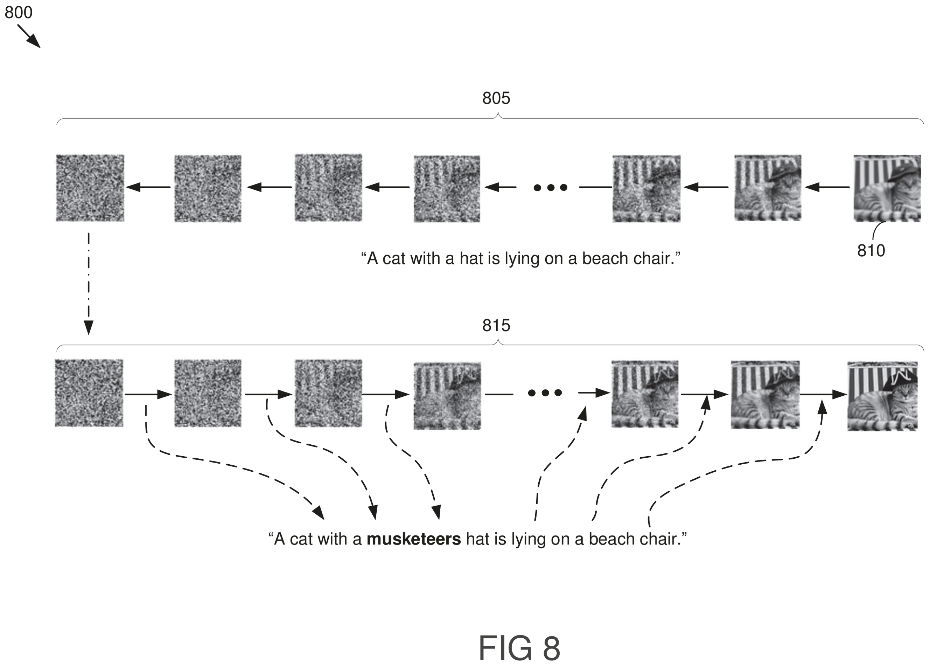

Figure 8 illustrates an example conversion 800 that includes inversion 805 and a text-conditioned diffusion process 815, according to some embodiments described herein. The inversion 805 starts with an input image 810 with the text prompt "A cat with a hat is lying on a beach chair." The inversion progressively adds noise to the input image 810.

The text-conditioned diffusion process 815 conditions the image based on a textual request. In this example, "musketeers" is added to the textual request associated with the input image 810 so that the textual request is for an image that includes "A cat with a musketeers hat is lying on a beach chair." The diffusion model combines text conditioning of the textual request with the noisy image in a forward diffusion.

The diffusion module 208 trains the diffusion model to maintain photorealism and to preserve the identity of the people shown in the image. During training, the diffusion model receives edit instructions and modifies the edit instructions to create corresponding prompts based on a language model, such as a large language model. For example, the diffusion module 208 converts, using the language model, the edit instructions "make person look like an astronaut" to prompts describing various aspects of how clothing for a space suit would look.

The diffusion model creates a set of input and output image pairs from the generated prompt pairs where each prompt can generate N number of images (using different seeds). The diffusion module 208 filters certain images from the image pairs, such as image transformations that do not match the given edit instruction, image transformations that do not produce well-aligned images, and pairs that do not match. In some embodiments, the diffusion module 208 also filters images based on an edit alignment score that reflects an alignment between the image-to-image transformation and the original edit caption and an image-text alignment score that reflects an alignment between the input/output image and the corresponding input/output prompt. In some embodiments, the diffusion module 208 trains the diffusion model by generating one or more loss functions based on the images that are filtered from the image pairs.

Diffusion models are trained to generate images by progressively adding noise to images, which the diffusion model then learns how to progressively remove. The diffusion model applies the denoising process to random seeds to generate realistic images. By simulating diffusion, the diffusion model generates one or more noisy images.

Once the diffusion model is trained, the diffusion model receives an input image and performs an inverse diffusion process on the initial image to generate a noisy image based on the initial image. In some embodiments, the diffusion module 208 performs the inverse diffusion using a DDIM inversion.

The diffusion model provides the noisy image to a first CNN with a feature and self-attention mechanism. The first CNN samples the input image and extracts features from the input image. The first CNN directly injects the extracted features and self-attention maps into a second CNN. The first CNN performs forward diffusion of the noisy initial image, which is the process of progressively denoising the noisy image using sampling to output a denoised initial image.

The text request and the noisy image are provided as input to the second CNN. The second CNN uses the self-attention maps to align the semantic features of the text request with the structure of the noisy image to generate a noisy translated image. The second CNN performs forward diffusion of the noisy translated image to output a denoised translated image.

The denoised initial image is combined with the denoised translated image and the preserving mask. This advantageously prevents modification to the face, which otherwise may be modified in a way that results in unrealistic features. In some embodiments, the diffusion module 208 performs the blending by using a mask smoothing algorithm and Poisson blending.

In some embodiments, the preserving mask includes other parts of the subject, such as the subject's hair if the user wants their hair to remain the same, the subject's fingers since fingers are often modified by machine-learning models in unrealistic ways, the subject's entire body where the subject is a pet to prevent the pet from being overly modified, etc. In some embodiments where the output image modifies the clothing of the subject, the preserving mask may include everything but the subject's clothing so that the body (minus the clothing) and the background of the initial image are preserved.

The combined denoised image and preserving mask are blended with the denoised translated image to form an output image that satisfies the textual request.

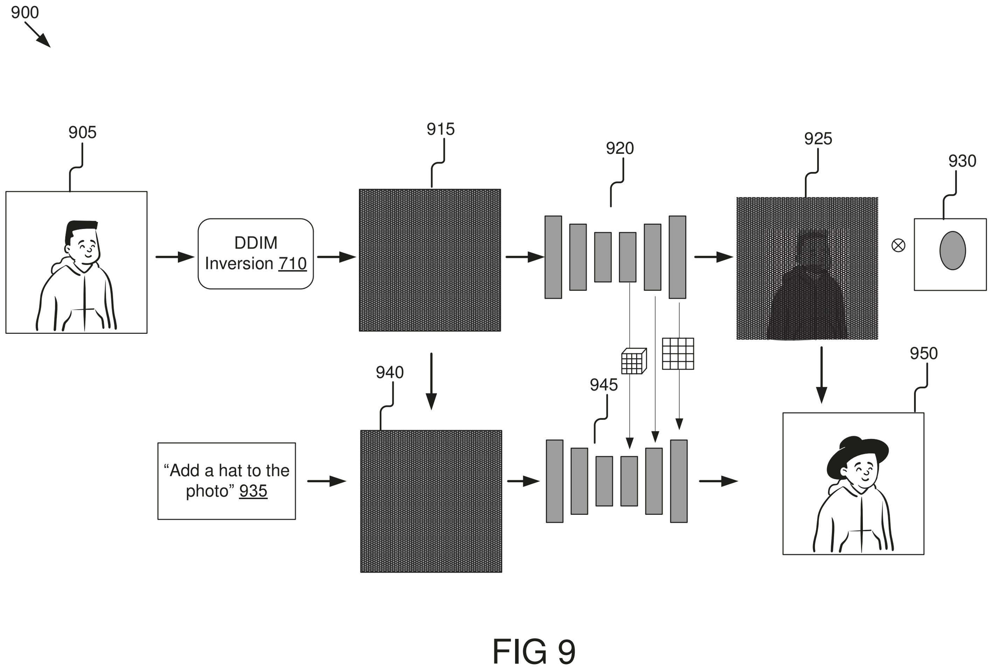

Turning to Figure 9, a block diagram of an example architecture 900 for generating an output image that incorporates a textual request is illustrated. The initial image 905 is provided to a diffusion model where a denoising diffusion implicit model (DDIM) inversion 910 is performed on the input image 705 to output a noisy image 915 that is obtained by inverting the input image. During the DDIM inversion, features are extracted from the input image.

The noisy image 915 is provided as input to a first CNN 920 with a self-attention mechanism. CNNs leverage an aggregation function over a localized receptive field according to convolution filter weights, which are shared by a feature map. Self-attention maps apply a weighted average operation based on the context of input features, where the attention weights are computed dynamically using a similarity function between related pixel pairs. The example architecture 900 uses a combination of both types of feature extraction to output a denoised initial image. The first CNN 920 outputs a denoised initial image 925.

Text conditioning is performed on the text input 935, specifically "Add a hat to the photo" is used to predict a class that best matches an output image corresponding to the text input 935. The text conditioning is used to generate a noisy text-guided translated image 940, which is provided to a second CNN 945. The second CNN 945 receives the extracted features and a self-attention map from the first CNN 920 and uses the extracted features and the self-attention map to align the noisy text-guided translated image 940 with the structure of the initial image 905.

The second CNN 945 outputs a denoised translated image that is blended with the denoised initial image 925 combined with a preserving mask 930 to form an output image 950 that satisfies the textual request of the subject with a hat. In this example, the preserving mask 930 encompasses the face to prevent modification to the face from the initial image 905 during blending. At each blending step, the original latent image inside the mask is used instead of the denoised translated image to preserve the original features.

### Example Methods

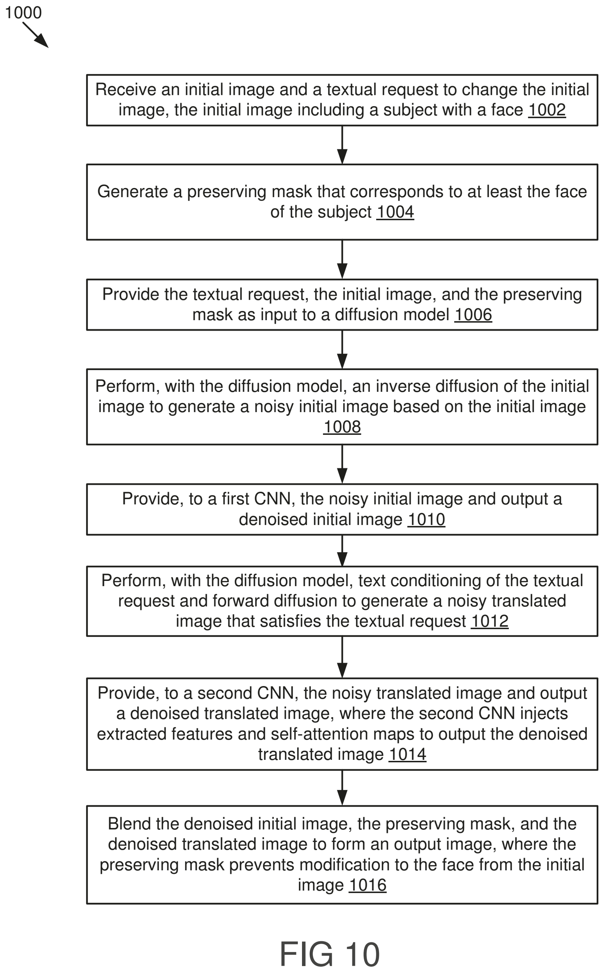

Figure 10 illustrates an example flowchart of a method 1000 to generate an output image. The method 1000 may be performed by the computing device 200 in Figure 2. In some embodiments, the method 1000 is performed by the user device 115, the media server 101, or in part on the user device 115 and in part on the media server 101.

The method 1000 of Figure 10 may begin at block 1002. At block 1002, an initial image and a textual request to change the initial image are received, where the initial image includes a subject with a face. The textual request may include a request to change attributes of the subject of the initial image, the background of the initial image, and/or a selection of a first object and a request to change the first object of the initial image into a second object. In some embodiments, the request is at least one selection from a group of a global preset, a menu of options, and/or a library of premade prompts.

The method may further include receiving a selection of a first object in the initial image, where the textual request includes comments to replace the first object in the initial image with a second object. The method may further include identifying, from the initial image, a region in a background to replace or modify and providing a suggestion to replace or modify the background, where the textual request is associated with the suggestion. The textual request may include a request to change a background of the initial object.

In addition to the textual request, the method may further include identifying, from the initial image, an object in a background to remove and providing a suggestion to remove the object from the background. In some embodiments, the method includes identifying, from the initial image, one or more objects to replace and providing a suggestion to replace the object. Block 1002 may be followed by block 1004.

At block 1004, a preserving mask is generated that corresponds to at least the face of the subject. A segmenter 204 may also be applied to other parts of the initial image depending on where the modifications are meant to be made. For example, in instances where the textual request includes a request change a background of the initial image, the preserving mask may include one or more parts of the subject in addition to the face of the subject. Block 1004 may be followed by block 1006.

At block 1006, the textual request, the initial image, and the preserving mask are provided as input to a diffusion model. Block 1006 may be followed by block 1008.

At block 1008, the diffusion model performs an inverse diffusion of the initial image to generate a noisy initial image based on the initial image. Block 1008 may be followed by block 1010.

At block 1010, a first CNN is provided with the noisy initial image and outputs a denoised initial image. Block 1010 may be followed by block 1012.

At block 1012, the diffusion model performs text conditioning of the textual request and forward diffusion to generate a noisy translated image that satisfies the textual request. Block 1012 may be followed by block 1014.

At block 1014, a second CNN is provided with the noisy translated image and outputs a denoised translated image, where the second CNN injects extracted features and self-attention maps to output the denoised translated image. Block 1014 may be followed by block 1016.

At block 1016, the denoised initial image, the preserving mask, and the denoised translated image are blended to form an output image, where the preserving mask prevents modification to the face from the initial image.

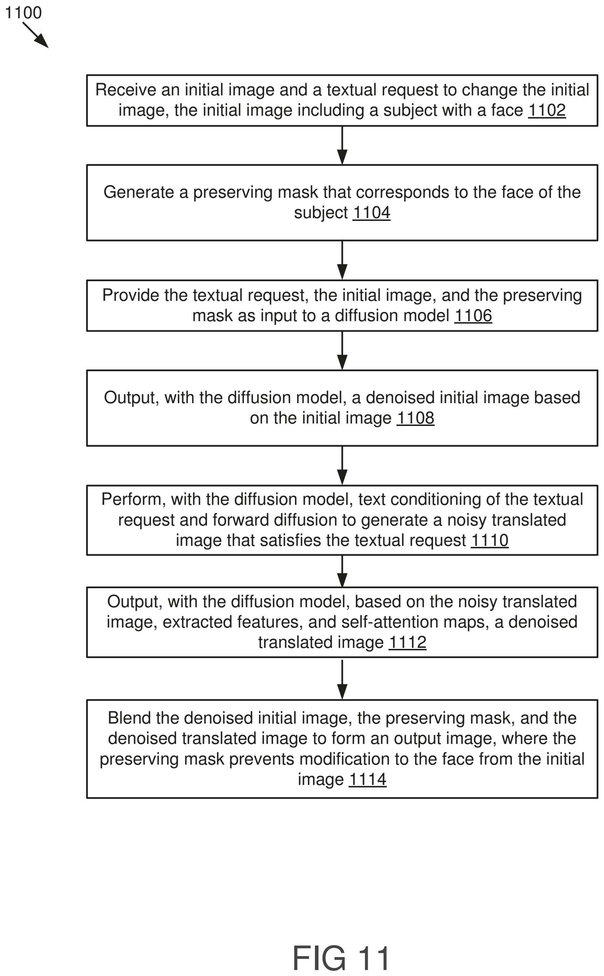

Figure 11 illustrates an example flowchart of a method 1100 to generate an output image. The method 1100 may be performed by the computing device 200 in Figure 2. In some embodiments, the method 1100 is performed by the user device 115, the media server 101, or in part on the user device 115 and in part on the media server 101.

The method 1100 of Figure 11 may begin at block 1102. At block 1102, an initial image and a textual request to change the initial image are received, where the initial image includes a subject with a face. Block 1102 may be followed by block 1104.

At block 1104, a preserving mask that corresponds to the face of the subject is generated. Block 1104 may be followed by block 1106.

At block 1106, the textual request, the initial image, and the preserving mask are provided as input to a diffusion model. Block 1106 may be followed by block 1108.

At block 1108, the diffusion model outputs a denoised initial image based on the initial image. Block 1108 may be followed by block 1110.

At block 1110, the diffusion model performs text conditioning of the textual request and forward diffusion to generate a noisy translated image that satisfies the textual request. Block 1110 may be followed by block 1112.

At block 1112, the diffusion model outputs, based on the noisy translated image, extracted features, and self-attention maps, a denoised translated image. Block 1112 may be followed by block 1114.

At block 1114, the denoised initial image, the preserving mask, and the denoised translated image are blended to form an output image, where the preserving mask prevents modification to the face from the initial image.

Further to the descriptions above, a user may be provided with controls allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

In the above description, for purposes of explanation, numerous specific details are set forth in order to provide a thorough understanding of the specification. It will be apparent, however, to one skilled in the art that the disclosure can be practiced without these specific details. In some instances, structures and devices are shown in block diagram form in order to avoid obscuring the description. For example, the embodiments can be described above primarily with reference to user interfaces and particular hardware. However, the embodiments can apply to any type of computing device that can receive data and commands, and any peripheral devices providing services.

Reference in the specification to "some embodiments" or "some instances" means that a particular feature, structure, or characteristic described in connection with the embodiments or instances can be included in at least one implementation of the description. The appearances of the phrase "in some embodiments" in various places in the specification are not necessarily all referring to the same embodiments.

Some portions of the detailed descriptions above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic data capable of being stored, transferred, combined, compared, and otherwise manipulated. It has proven convenient at times, principally for reasons of common usage, to refer to these data as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms including "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission, or display devices.

The embodiments of the specification can also relate to a processor for performing one or more steps of the methods described above. The processor may be a special-purpose processor selectively activated or reconfigured by a computer program stored in the computer. Such a computer program may be stored in a non-transitory computer-readable storage medium, including, but not limited to, any type of disk including optical disks, ROMs, CD-ROMs, magnetic disks, RAMs, EPROMs, EEPROMs, magnetic or optical cards, flash memories including USB keys with non-volatile memory, or any type of media suitable for storing electronic instructions, each coupled to a computer system bus.

The specification can take the form of some entirely hardware embodiments, some entirely software embodiments or some embodiments containing both hardware and software elements. In some embodiments, the specification is implemented in software, which includes, but is not limited to, firmware, resident software, microcode, etc.

Furthermore, the description can take the form of a computer program product accessible from a computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

A data processing system suitable for storing or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Further exemplary embodiments of the invention are given below.
Example 1. A computer-implemented method comprising:
   receiving an initial image and a textual request to change the initial image, the initial image including a subject with a face;
   generating a preserving mask that corresponds to the face of the subject;
   providing the textual request, the initial image, and the preserving mask as input to a diffusion model;
   outputting, with the diffusion model, a denoised initial image based on the initial image;
   performing, with the diffusion model, text conditioning of the textual request and forward diffusion to generate a noisy translated image that satisfies the textual request;
   outputting, with the diffusion model, based on the noisy translated image, extracted features, and self-attention maps, a denoised translated image; and
   blending the denoised initial image, the preserving mask, and the denoised translated image to form an output image, wherein the preserving mask prevents modification to the face from the initial image.
Example 2. The method of example 1, wherein:
   outputting the denoised initial image includes:
      performing, with the diffusion model, an inverse diffusion of the initial image to generate a noisy initial image based on the initial image; and
      providing, to a first convolutional neural network (CNN), the noisy initial image and outputting the denoised initial image; and
   outputting the denoised translated image includes:
      providing, to a second CNN, the noisy translated image; injecting the extracted features and the self-attention maps during diffusion; and
      outputting the denoised translated image.
Example 3. The method of example 2, wherein the inverse diffusion is a denoising diffusion implicit model (DDIM) inversion.
Example 4. The method of example 1, further comprising:
   receiving a selection of a first object in the initial image, wherein the textual request includes comments to replace the first object in the initial image with a second object.
Example 5. The method of example 1, further comprising:
   identifying, from the initial image, a region in a background to replace or modify; and
   providing a suggestion to replace or modify the background, wherein the textual request is associated with the suggestion.
Example 6. The method of example 1, further comprising:
   identifying, from the initial image, an object in a background to remove; and
   providing a suggestion to remove the object from the background.
Example 7. The method of example 1, further comprising:
   identifying, from the initial image, one or more objects to replace; and
   providing a suggestion to replace the object.
Example 8. The method of example 1, wherein:
   the textual request is to change a background of the initial image; and
   the preserving mask further includes one or more parts of the subject in addition to the face of the subject.
Example 9. The method of example 1, wherein the textual request further includes at least one selection from a group of a global preset, a menu of options, a library of premade prompts, and combinations thereof.
Example 10. A non-transitory computer-readable medium with instructions stored thereon that, when executed by one or more processors, cause the one or more processors to perform operations comprising:
   receiving an initial image and a textual request to change the initial image, the initial image including a subject with a face;
   generating a preserving mask that corresponds to the face of the subject;
   providing the textual request, the initial image, and the preserving mask as input to a diffusion model;
   outputting, with the diffusion model, a denoised initial image based on the initial image;
   performing, with the diffusion model, text conditioning of the textual request and forward diffusion to generate a noisy translated image that satisfies the textual request;
   outputting, with the diffusion model, based on the noisy translated image, extracted features, and self-attention maps, a denoised translated image; and
   blending the denoised initial image, the preserving mask, and the denoised translated image to form an output image, wherein the preserving mask prevents modification to the face from the initial image.
Example 11. The non-transitory computer-readable medium of example 10, wherein the operations further comprise:
   outputting the denoised initial image includes:
      performing, with the diffusion model, an inverse diffusion of the initial image to generate a noisy initial image based on the initial image; and
      providing, to a first convolutional neural network (CNN), the noisy initial image and outputting the denoised initial image; and
   outputting the denoised translated image includes:
      providing, to a second CNN, the noisy translated image;
      injecting the extracted features and the self-attention maps during diffusion; and
   outputting the denoised translated image.
Example 12. The non-transitory computer-readable medium of example 11, wherein the inverse diffusion is a denoising diffusion implicit model (DDIM) inversion.
Example 13. The non-transitory computer-readable medium of example 10, wherein the operations further comprise:
   receiving a selection of a first object in the initial image, wherein the textual request
   includes comments to replace the first object in the initial image with a second object.
Example 14. The non-transitory computer-readable medium of example 10, wherein the operations further comprise:
   identifying, from the initial image, a region in a background to replace or modify; and
   providing a suggestion to replace or modify the background, wherein the textual request is associated with the suggestion.
Example 15. The non-transitory computer-readable medium of example 10, wherein the operations further comprise:
   identifying, from the initial image, a region in a background to replace or modify; and
   providing a suggestion to replace or modify the background, wherein the textual
      request is associated with the suggestion.
Example 16. A system comprising:
   a processor; and
   a memory coupled to the processor, with instructions stored thereon that, when
      executed by the processor, cause the processor to perform operations comprising:
      receiving an initial image and a textual request to change the initial image, the initial image including a subject with a face;
      generating a preserving mask that corresponds to the face of the subject;
      providing the textual request, the initial image, and the preserving mask as input to a diffusion model;
      outputting, with the diffusion model, a denoised initial image based on the initial image;
      performing, with the diffusion model, text conditioning of the textual request and forward diffusion to generate a noisy translated image that satisfies the textual request;
      outputting, with the diffusion model, based on the noisy translated image, extracted features, and self-attention maps, a denoised translated image; and
      blending the denoised initial image, the preserving mask, and the denoised translated image to form an output image, wherein the preserving mask prevents modification to the face from the initial image.
Example 17. The system of example 16, wherein the operations further comprise:
   outputting the denoised initial image includes:
      performing, with the diffusion model, an inverse diffusion of the initial image to generate a noisy initial image based on the initial image; and
      providing, to a first convolutional neural network (CNN), the noisy initial image and outputting the denoised initial image; and
   outputting the denoised translated image includes:
      providing, to a second CNN, the noisy translated image;
      injecting the extracted features and the self-attention maps during diffusion; and
   outputting the denoised translated image.
Example 18. The system of example 17, wherein the inverse diffusion is a denoising diffusion implicit model (DDIM) inversion.
Example 19. The system of example 16, wherein the operations further comprise:
   receiving a selection of a first object in the initial image, wherein the textual request includes comments to replace the first object in the initial image with a second object.
Example 20. The system of example 16, wherein the operations further comprise:
   identifying, from the initial image, a region in a background to replace or modify; and
   providing a suggestion to replace or modify the background, wherein the textual request is associated with the suggestion.

## Claims

1. A computer-implemented method (1000, 1100) comprising:
providing a user interface to a user that includes an initial image that includes a subject and a library of premade prompts;
receiving a selection of a premade prompt of the library of premade prompts, wherein the premade prompt is associated with a textual request;
generating (1004, 1104) a preserving mask that corresponds to a face of the subject;
providing (1006;1106) the textual request, the initial image, and the preserving mask as input to a diffusion model, wherein the preserving mask prevents modification to the face from the initial image;
performing (1008), with the diffusion model, an inverse diffusion of the initial image to generate a noisy initial image based on the initial image;
performing (1012; 1110), with the diffusion model, text conditioning of the textual request and forward diffusion to generate a noisy translated image that satisfies the textual request;
outputting (1112), with the diffusion model, based on the noisy translated image, a denoised translated image; and
blending (1016; 1114) the denoised initial image and the denoised translated image to form an output image.

2. The method of claim 1, wherein a first convolutional neural network, CNN, receives the noisy initial image as input and outputs a denoised initial.

3. The method of claim 2, wherein a second CNN receives the noisy translated image and outputs the denoised translated image, the CNN injecting extracted features and self-attention maps to output the denoised translated image.

4. The method of claim 1, wherein the user interface further includes a menu of at least one option selected from a group of an option for modifying clothes of the subject, an option for modifying scenery in the initial image, or a free text option.

5. The method of claim 1, wherein the library of premade prompts includes different themes to be applied to the initial image.

6. The method of claim 1, wherein the user interface further includes options for selecting different regions of the initial image to change using the premade prompt.

7. The method of claim 6, wherein the options for selecting the different regions of the initial image includes tapping or brushing over an area.

8. The method of claim 6, wherein the options for selecting the different regions of the initial image selecting an object in the initial image by at least one of tapping on the object circling the object or scribbling on the object.

9. A non-transitory computer-readable medium with instructions stored thereon that, when executed by one or more processors, cause the one or more processors to carry out the steps of the computer-implemented method of one of the claims 1 to 8.

10. A system (100, 200) comprising:
a processor (133, 235); and
a memory (133, 237) coupled to the processor (133, 235), with instructions stored thereon that, when executed by the processor, cause the processor to perform operations comprising:
providing a user interface to a user that includes an initial image that includes a subject and a library of premade prompts;
receiving a selection of a premade prompt of the library of premade prompts, wherein the premade prompt is associated with a textual request;
generating (1004, 1104) a preserving mask that corresponds to a face of the subject;
providing (1006;1106) the textual request, the initial image, and the preserving mask as input to a diffusion model, wherein the preserving mask prevents modification to the face from the initial image;
performing (1008), with the diffusion model, an inverse diffusion of the initial image to generate a noisy initial image based on the initial image;
performing (1012; 1110), with the diffusion model, text conditioning of the textual request and forward diffusion to generate a noisy translated image that satisfies the textual request;
outputting (1112), with the diffusion model, based on the noisy translated image, a denoised translated image; and
blending (1016; 1114) the denoised initial image and the denoised translated image to form an output image.

11. The system of claim 10, wherein a first convolutional neural network, CNN, receives the noisy initial image as input and outputs a denoised initial.

12. The system of claim 11, wherein a second CNN receives the noisy translated image and outputs the denoised translated image, the CNN injecting extracted features and self-attention maps to output the denoised translated image.

13. The system of claim 10, wherein the user interface further includes a menu of at least one option selected from a group of an option for modifying clothes of the subject, an option for modifying scenery in the initial image, or a free text option.

14. The system of claim 10, wherein the library of premade prompts includes different themes to be applied to the initial image.

15. The system of claim 10, wherein the user interface further includes options for selecting different regions of the initial image to change using the premade prompt.
